# EUROPEAN PATENT APPLICATION

(11) **EP 4 530 513 A1**
(43) Date of publication of application: **02.04.2025**
(21) Application number: 24195177.1
(22) Date of filing: 19.08.2024
(51) Int. Cl.: F16L 11/26, F16L 33/01, F16L 33/34, F16L 59/04, F16L 59/153

(54) **AIR-CONNECTING HOSE FOR A HEAT PUMP OR HEAT RECOVERY UNIT**

(30) Priority: 26.09.2023 NL 2035880
(71) Applicant: Quatrofolium Holding B.V., 3763 LB Soest (NL)
(72) Inventor: KWEE, Hwie-Yang, SOEST (NL); VAN ROSSUM, Petrus, SOEST (NL)
(74) Representative: Algemeen Octrooi- en Merkenbureau B.V.

(57) **Abstract**

A flexible vapour-tight air-connecting hose (1) for a heat pump or heat recovery unit, wherein the air-connecting hose (1) comprises a hose body (3), which hose body (3), at least at one end (5), is provided with a connection socket (7), the hose body (3) comprises an inner hose (9) and an outer hose (11), wherein an insulation layer (13) is provided between the inner hose (9) and outer hose (11), wherein the inner hose (9) is made of a vapour-tight laminate material, wherein the outer hose (11) is made of aluminium-laminate sandwich material, and wherein the insulation layer (13) is made of glass wool.

## Description

The present document concerns a flexible vapour-tight air-connecting hose for a heat pump or heat recovery unit, wherein the air-connecting hose comprises a hose body which, at least at one end, is provided with a connection socket, the hose body comprises an inner hose and an outer hose, wherein an insulation layer is provided between the inner hose and outer hose.

Ventilation heat pumps or heat recovery units are often provided with connecting hoses or ventilation channels for the supply and discharge of (external) air. Heat is extracted from the external air when heat is required for heating a building, such as a house during the winter. Or heat is supplied to the external air when the building must be cooled, for example in the summer. The flow of air through the air-connecting hose or ventilation channel produces noise, both noise which is emitted towards the outside by the inflowing and outflowing air, and noise which is emitted in the building by the flow of air in the air-connecting hose or ventilation channel, and by the heat pump or heat recovery unit in the installation space of the building. The air-connecting hose or ventilation channel is therefore often provided with measures for damping the noise of the heat pump or heat recovery unit and/or from the through-flowing air.

Because in winter the heat pump or heat recovery unit draws in external air (down to -20 degrees Celsius) to the inside, and the building, including the installation space of the heat pump or heat recovery unit with connecting hoses or ventilation channels, is often at room temperature, condensation can form on the cold metal parts of the air-connecting hose or ventilation channel, such as the connection sockets, and condensation droplets from the connection sockets can drip down onto the floor of the installation space.

A flexible air-connecting hose of a heat pump or heat recovery unit must be vapour-tight, and in particular the inner hose must be vapour-tight so that the insulation layer remains dry and therefore retains its insulating effect.

The object of the present document is to propose an improved flexible air-connecting hose for a heat pump or heat recovery unit, which connecting hose is more vapour-tight, prevents the formation of condensation, achieves a good sound damping and can be produced easily at low cost.

The above objects are achieved in the air-connecting hose cited initially by making the inner hose from a vapour-tight laminate material and making the outer hose of an aluminium-laminate sandwich material, and making the insulation layer of glass wool. It has been found that by a combination of the above-named materials, a flexible air-connecting hose is obtained which is vapour-tight, prevents the formation of condensation on the outside of metal parts such as the connection sockets, and has good sound-damping properties.

Preferably, as the glass wool of the insulation layer, a glass wool with a natural binder is selected, such as e.g. Ecose glass wool. This glass wool has a better damping effect and is durable and environmentally friendly.

In particular, the outer hose is provided with a spiral-wound steel wire on its outer surface. This makes the air-connecting hose stiffer and gives better sound damping.

In an advantageous embodiment, the outside of the cylindrical side face of the at least one connection socket is provided with an annular insulating strip. This prevents a cold bridge at the end of the flexible air-connecting hose, which greatly limits the formation of condensation.

Preferably, the at least one end of the hose body is arranged on the radial outside of the insulating strip. Thus the insulating layer tightly adjoins the insulating strip, whereby the connection socket, and in particular the connection to the inner hose, is well insulated.

In particular, the insulating strip is made of an elastomer foam. It has been found that an insulating strip of elastomer foam can be fitted easily, and also the hose body can be easily pushed over the insulating strip elastomer foam and secured. In addition, an elastomer foam has good insulating properties so that condensation formation on the connection socket is avoided.

In an advantageous embodiment, the at least one end of the hose body is connected to the insulating strip by means of a connecting tape.

Preferably, for the connecting tape, a tape of polyacrylic on an LDPE carrier is used which is resistant to UV radiation. Using a connecting tape, the end of the hose body can be connected to the insulating strip on the connection socket in a durable and simple fashion at low cost.

In particular, the at least one connection socket is provided with a double EPDM lip ring for vapour-tight and airtight coupling of the air-connecting hose to an air connection on the heat pump or heat recovery unit, or to an air connection of an air inlet or air outlet outside the building.

In an alternative embodiment, both ends of the hose body are provided with a connection socket for rapid and simple coupling of the flexible air-connecting hose to the heat pump or heat recovery unit, and to an air inlet or air outlet for external air outside the building.

The invention is presented in more detail below with reference to a drawing showing an exemplary embodiment.
Figure 1A shows a side view of an exemplary embodiment of a flexible vapour-tight connecting hose provided with two connection sockets;
Figure 1B shows a radial cross-section of the flexible vapour-tight air-connecting hose from figure 1A;
Figure 2A shows an axial longitudinal section of the flexible vapour-tight air-connecting hose from figure 1A;
Figure 2B shows in more detail the connection of the hose body to the insulating strip of the connection socket from figure 2A.

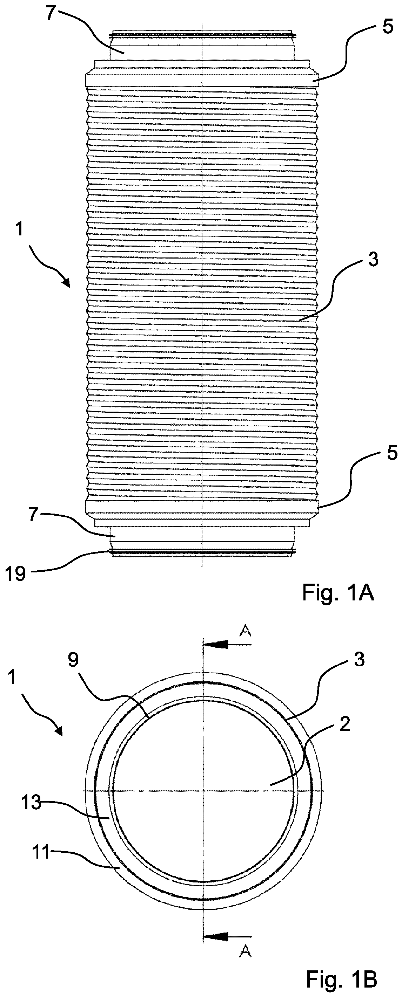

Figure 1A shows in side view a flexible vapour-tight air-connecting hose 1 which is suitable for connection of a heat pump or heat recovery unit to the external air. The flexible vapour-tight connecting hose 1 is often used between the heat pump, which is installed in an installation space in a building or house, and the air inlet or outlet from the house. To extract heat from the outside air or supply heat to this, external air is supplied from the air inlet of the house via a flexible vapour-tight air-connecting hose 1 to the air inlet of the heat pump or heat recovery unit, and this air stream is discharged again to the external air from the air outlet of the heat pump or heat recovery unit through a second flexible vapour-tight air-connecting hose 1 to the air outlet from the house. To allow rapid and simple installation of the flexible vapour-tight air-connecting hoses 1, the flexible vapour-tight air-connecting hose 1 comprises a hose body 3 provided with (in this example) two connection sockets 7, one at each end 5 of the hose body 3. The hose body 3 usually has a degree of flexibility to facilitate mounting. The connection sockets 7 are often made of a metal such as stainless steel, and are configured to be coupled (and decoupled) quickly and easily to or from the air inlet and air outlet of the heat pump or heat recovery unit and/or of the house.

Figure 1B shows a radial cross-section through the middle of the hose body 3 of the flexible vapour-tight connecting hose 1 from figure 1A. The air flows from or to the heat pump or heat recovery unit in the free internal space 2 of the hose body 3. The hose body 3, viewed radially from inside to outside, comprises an inner hose 9, an insulating layer 13 and an outer hose 11. The inner hose 9 defines the free internal space 2 for the air stream. This inner hose 9 is made of a vapour-tight laminate material so that no moisture or other gas can come into contact with the insulating layer 13 through this inner layer 9. The insulating layer 13 is made of glass wool, wherein preferably, for the glass wool, a glass wool with a natural binder is selected, such as Ecose glass wool, in which there is no formaldehyde, whereby this glass wool is odourless and non-irritant, and the flexible vapour-tight air connecting hose 1 has a better sound-damping effect. The outer hose 11 is made of an aluminium-laminate sandwich material. This combination further increases the sound-damping effect of the flexible vapour-tight air connecting hose 1. To make the flexible vapour-tight air-connecting hose 1 stiffer, a spiral-wound steel wire may be used on the outside of the outer hose 11 of the hose body 3.

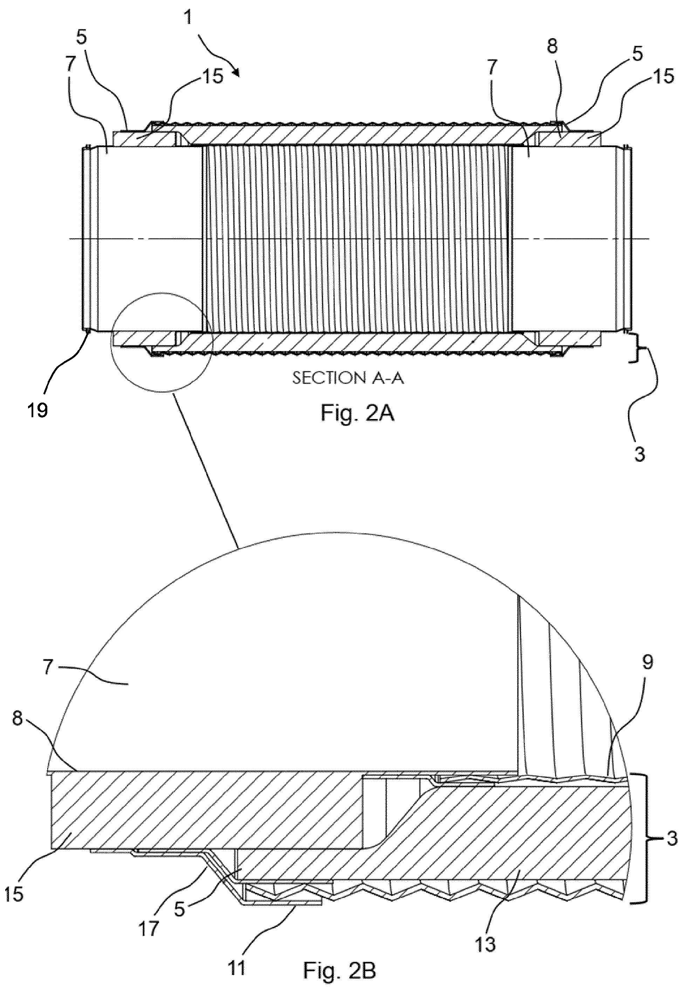

Figure 2A shows an axial longitudinal section through the centre line of the flexible vapour-tight air-connecting hose 1 from figures 1A and 1B, with a connection socket 7 at both ends 5 of the hose body 3. The connection sockets 7 are made of metal, preferably stainless steel. To prevent a cold bridge and condensation of moisture on the cold metal connection sockets from the cold (external) air, the connection sockets 7 are provided with an insulating strip. Preferably, an annular insulating strip 15 is arranged over the outside of the cylindrical side face 8 of the connection sockets 7. This insulating strip 15 is preferably made of an elastomer foam based on synthetic rubber. This material combines good heat-insulating properties with good sound-damping properties, and can easily be applied to a metal. The ends 5 of the hose body 3 are placed over the insulating strips 15 on the connection sockets 7 so as to give good insulation of the largest part of the connection sockets 7. The ends 5 of the hose body 3 are connected by means of a connecting tape 17 to the insulating strip 15 arranged on the outsides of the cylindrical side faces 8 of the connection sockets 7.

Figure 2B shows part A of the left connection socket 7 from figure 2A enlarged and in more detail. It is clearly seen that the hose body 3 is constructed, in the radial direction from inside to outside, from an inner hose 9, an insulating layer 13 and an outer hose 11. The connection socket 7 is dimensioned such that in the radial direction, it just fits in the inner diameter of the inner hose 9. On the outside of the cylindrical side face 8, the connection socket 7 is provided with an insulating strip 15, over which the end 5 of the hose body 3 is pushed. Thus the insulating material 13 of the hose body 3 is compressed in the radial direction, whereby the connection socket 11 is effectively clamped in the end 5 of hose body 3. For a good connection of the hose body 3 to the insulating strip 15 on the connection socket 7, a piece of connecting tape 17 is applied which extends over the insulating strip 15 and over the outer hose 11 at the end 5 of the hose body 3. Good results have been obtained with a connecting tape 17 based on polyacrylic on an LDPE (low-density polyethylene) carrier. Preferably, the connecting tape 17 is resistant to UV (ultraviolet radiation).

In an advantageous embodiment, the connection sockets 7 are provided with a double EPDM (ethylene propylene diene monomer) lip ring 19 for vapour-tight coupling of the flexible vapour-tight air-connecting hose 1 to an air connection on the heat pump or heat recovery unit, or to an air connection of an air inlet or air outlet through a wall or roof of the building.

In the embodiment of the flexible vapour-tight air-connecting hose 1 shown in figures 1A - 2B, the hose body 3 is provided with a connection socket 7 at both ends 5 for rapid and simple coupling of the flexible vapour-tight air-connecting hose 1 to the air inlet or air outlet of the heat pump or heat recovery unit, and to an air inlet or air outlet to the external air. If required, a connection socket 7 may also be provided at one end 5 of the hose body 3, wherein the other end 5 is connected in an alternative fashion to the heat pump or heat recovery unit or to an air network for supply and discharge of (external) air.

## Claims

1. Flexible vapour-tight air-connecting hose (1) for a heat pump or heat recovery unit, wherein the vapour-tight air-connecting hose (1) comprises a hose body (3), which hose body (3), at least at one end (5), is provided with a connection socket (7), the hose body (3) comprises an inner hose (9) and an outer hose (11), wherein an insulation layer (13) is provided between the inner hose (9) and outer hose (11), **characterized in that**
the inner hose (9) is made of a vapour-tight laminate material,
the outer hose (11) is made of aluminium-laminate sandwich material,
the insulation layer (13) is made of glass wool.

2. Flexible vapour-tight air-connecting hose (1) for a heat pump or heat recovery unit according to Claim 1, wherein for the glass wool of the insulation layer (13), a glass wool with a natural binder is selected.

3. Flexible vapour-tight air-connecting hose (1) for a heat pump or heat recovery unit according to Claim 1 - 2, wherein the outer hose (11) is provided with a spiral-wound steel wire on its outer surface.

4. Flexible vapour-tight air-connecting hose (1) for a heat pump or heat recovery unit according to one of Claims 1 - 3, wherein the outside of the cylindrical side face (8) of the at least one connection socket (7) is provided with an annular insulating strip (15).

5. Flexible vapour-tight air-connecting hose (1) for a heat pump or heat recovery unit according to Claim 4, wherein the at least one end (5) of the hose body (3) is arranged on the radial outside of the insulating strip (15).

6. Flexible vapour-tight air-connecting hose (1) for a heat pump or heat recovery unit according to Claim 4 - 5, wherein the insulating strip (15) is made of an elastomer foam.

7. Flexible vapour-tight air-connecting hose (1) for a heat pump or heat recovery unit according to Claim 5 - 6, wherein the at least one end (5) of the hose body (3) is connected to the insulating strip (15) by means of a connecting tape (17).

8. Flexible vapour-tight air-connecting hose (1) for a heat pump or heat recovery unit according to Claim 1, wherein for the connecting tape (17), a tape of polyacrylic on an LDPE carrier is used which is resistant to UV radiation.

9. Flexible vapour-tight air-connecting hose (1) for a heat pump or heat recovery unit according to Claim 1 - 8, wherein the at least one connection socket (7) is provided with a double EPDM lip ring (19).

10. Flexible vapour-tight air-connecting hose (1) for a heat pump or heat recovery unit according to any of the preceding claims, wherein both ends (5) of the hose body (3) are provided with a connection socket (7).

11. Flexible vapour-tight air-connecting hose (1) for a heat pump or heat recovery unit according to Claim 1, which can be mounted more easily in small spaces because the vapour-tight air-connecting hose is more flexible than a rigid ventilation channel.
